(19)

Europäisches
Patentamt
European
Patent Office
Office européen
des brevets

(11) **EP 4 152 235 A1**

(12) **EUROPEAN PATENT APPLICATION**
published in accordance with Art. 153(4) EPC

(43) Date of publication:
**22.03.2023 Bulletin 2023/12**

(21) Application number: **21928361.1**

(22) Date of filing: **26.07.2021**

(51) International Patent Classification (IPC):
**G06Q 30/02** (2012.01)

(86) International application number:
**PCT/JP2021/027527**

(87) International publication number:
**WO 2023/007544 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Rakuten Group, Inc.**
**Tokyo 158-0094 (JP)**

(72) Inventor: **SALAH, Aghiles**
**Tokyo (JP)**

(74) Representative: **Hoffmann Eitle**
**Patent- und Rechtsanwälte PartmbB**
**Arabellastraße 30**
**81925 München (DE)**

(54) **INFORMATION PROCESSING DEVICE, INFORMATION PROCESSING METHOD, AND PROGRAM**

(57)     An information processing apparatus (1) comprises: an acquisition means (11) for acquiring a plurality of modalities associated with an object and information identifying the object; a feature generation means (12) for generating feature values for each of the plurality of modalities; a deriving means (13) for deriving weights corresponding to each of the plurality of modalities based on the feature values for each of the plurality of modalities and information identifying the object; and a prediction means (14) for predicting an attribute of the object from a concatenated value of the feature values for each of the plurality of modalities, weighted by the corresponding weights.

FIG. 1

**Description**

TECHNICAL FIELD

The present invention relates to an information processing apparatus, an information processing method, and a program, and in particular, to a technique for predicting an attribute of an object from information related to the object.

BACKGROUND ART

Machine learning, including deep learning, is known as a method to achieve complex identification and estimation with high accuracy. In a field of machine learning, a use of multimodal deep learning to identify any event/attribute by combining a plurality of modalities, which are images, text, speech, and sensor values, etc., has attracted attention.

On the other hand, in recent years, electronic commerce (e-commerce), in which products are sold over the Internet, has been actively conducted, and many Electronic Commerce (EC) sites have been established on the Web to conduct such e-commerce transactions. E-commerce sites are often built in the languages of countries around the world, allowing users (consumers) in many countries to purchase products. Users can select and purchase desired products without visiting actual stores and regardless of time by accessing e-commerce sites from personal computer (PCs) or mobile terminals such as smartphones.

An EC site may display products with attributes similar to those of products purchased by a user in the past, together on a screen that the user is browsing, as products for recommendation, in order to increase the user's desire to purchase. In addition, when a user purchases a desired product, the user may also search for the product by its attributes. Thus, in e-commerce, identifying attributes of products is a common issue for website operators and product providers.

Non-Patent Literature 1 discloses a method that, using multimodal deep learning, predicts and identifies attributes of a product from multiple modalities each of which is information related to the product. In the literature, from two modalities, one is an image of a product, and the other is text describing the product, as information related to the product, the color and partial shape of the product are identified as attributes of the product from the result of combining and concatenating both modalities.

LISTING OF REFERENCES

NON-PATENT LITERATURE

NON-PATENT LITERATURE 1: Tiangang Zhu, et. al. at. " Multimodal Joint Attribute Prediction and Value Extraction for E-commerce Product", Proceedings of the 2020 Conference on Empirical Methods in Natural Language Processing (EMNLP), pp. 2129-2139, November 2020.

SUMMARY OF THE INVENTION

PROBLEMS TO BE SOLVED BY THE INVENTION

According to the method disclosed in Non-Patent Document 1, the combination of two modalities, the image of the product and the text describing the product, results in a higher prediction accuracy of product attributes compared to the case where only text describing the product is used.

However, there is a wide range of products sold on e-commerce sites, and for each product, there is different information (modality) associated with the product. So simply concatenating modalities in a similar manner for all products may not accurately identify the attributes of each product.

The present invention has been made in order to the above mentioned problems and an object thereof is to provide an information processing apparatus, an information processing method, and a program that appropriately identify attributes of an object, such as a product, from multiple of information related to the object.

SOLUTION TO PROBLEM

In order to solve the above mentioned problems, according to one aspect of the present disclosure, there is provided an information processing apparatus which comprises: an acquisition means for acquiring a plurality of modalities associated with an object and information identifying the object; a feature generation means for generating feature values for each of the plurality of modalities; a deriving means for deriving weights corresponding to each of the plurality of modalities based on the feature values for each of the plurality of modalities and information identifying the object;

and a prediction means for predicting an attribute of the object from a concatenated value of the feature values for each of the plurality of modalities, weighted by the corresponding weights.

The deriving means may derive, from the plurality of feature values and the information identifying the object, attention weights that indicate the importance of each of the plurality of modalities to the attribute prediction, as the weights corresponding to each of the plurality of feature values.

The attention weights of the plurality of modalities may be 1 in total.

In order to solve the above mentioned problems, according to another aspect of the present disclosure, there is provided an information processing apparatus which comprises: an acquisition means for acquiring a plurality of modalities associated with an object and information identifying the object; a feature generation means for generating feature values for each of the plurality of modalities; a deriving means for deriving weights corresponding to each of the plurality of feature values by applying the feature values for each of the plurality of modalities and the information identifying the object to the second learning model, and a prediction means for predicting an attribute of the object by applying a concatenated value of the feature values of each for the plurality of modalities, weighted by the corresponding weights, to the third learning model, wherein the second learning model is a learning model that outputs different weights for each object.

The second learning model may be a learning model that takes, as input, the plurality of feature values and information identifying the object, and outputs, as the weights corresponding to each of the plurality of feature values, the attention weights indicating the importance of each of the plurality of modalities to the attribute prediction.

The attention weights of the plurality of modalities are 1 in total.

The first learning model may be a learning model that takes, as input, the plurality of modalities and outputs the feature values of the plurality of modalities by mapping them to a latent space common to the plurality of modalities.

The third learning model may be a learning model that outputs a prediction result of the attribute using the concatenated value as input.

The acquisition means may encode the plurality of modalities to acquire a plurality of encoded modalities, and the feature generation means may generate the feature values for each of the plurality of encoded modalities.

The object may be a commodity, and the plurality of modalities includes two or more of data of an image representing the commodity, data of text describing the commodity, and data of sound describing the commodity.

The attribute of the object may include color information of the product.

In order to solve the above mentioned problems, according to yet another aspect of the present disclosure, there is provided an information processing method which comprises: acquiring a plurality of modalities associated with an object and information identifying the object; generating feature values for each of the plurality of modalities; deriving weights corresponding to each of the plurality of modalities based on the feature values for each of the plurality of modalities and information identifying the object; and predicting an attribute of the object from a concatenated value of the feature values for each of the plurality of modalities, weighted by the corresponding weights.

In order to solve the above mentioned problems, according to yet another aspect of the present disclosure, there is provided an information processing method which comprises: acquiring a plurality of modalities associated with an object and information identifying the object; generating feature values for each of the plurality of modalities; deriving weights corresponding to each of the plurality of feature values by applying the feature values for each of the plurality of modalities and the information identifying the object to the second learning model, and predicting an attribute of the object by applying a concatenated value of the feature values of each for the plurality of modalities, weighted by the corresponding weights, to the third learning model, wherein the second learning model is a learning model that outputs different weights for each object.

In order to solve the above mentioned problems, according to yet another aspect of the present disclosure, there is provided an information processing program for causing a computer to execute information processing, the program causing the computer to execute processing, which comprises: an acquisition process for acquiring a plurality of modalities associated with an object and information identifying the object; a feature generation process for generating feature values for each of the plurality of modalities; a deriving process for deriving weights corresponding to each of the plurality of modalities based on the feature values for each of the plurality of modalities and information identifying the object; and a prediction process for predicting an attribute of the object from a concatenated value of the feature values for each of the plurality of modalities, weighted by the corresponding weights

In order to solve the above mentioned problems, according to yet another aspect of the present disclosure, there is provided an information processing program for causing a computer to execute information processing, the program causing the computer to execute processing, which comprises: an acquisition process for acquiring a plurality of modalities associated with an object and information identifying the object; a feature generation process for generating feature values for each of the plurality of modalities; a deriving process for deriving weights corresponding to each of the plurality of feature values by applying the feature values for each of the plurality of modalities and the information identifying the object to the second learning model, and a prediction process for predicting an attribute of the object by applying a concatenated value of the feature values of each for the plurality of modalities, weighted by the corresponding weights, to the third learning model, wherein the second learning model is a learning model that outputs different weights for each object.

## ADVANTAGEOUS EFFECT OF THE INVENTION

According to the present invention, it makes it possible to appropriately identify attributes of an object, such as a product, from a plurality of information related to the object.

The objects, modes and effects of the invention described above, as well as objects, modes and effects of the invention not described above, will be understood by those skilled in the art from the following embodiments of the invention by referring to the accompanying drawings and claims.

## BRIEF DESCRIPTION OF DRAWING

FIG. 1 is a block diagram showing an example of a functional configuration of a classification apparatus according to an embodiment of the present invention.
FIG. 2 illustrates an example of a hardware configuration of a classification apparatus according to an embodiment of the present invention.
FIG. 3 is a schematic diagram illustrating processing by a feature generation unit, an attention unit, and a classification unit according to an embodiment of the present invention.
FIG. 4A illustrates an example of an attention weight distribution.
FIG. 4B illustrates another example of an attention weight distribution.
FIG. 5 illustrates examples of attention weight distribution for image data and text data.
FIG. 6 is a flowchart showing an example of classification processing performed by a classification apparatus according to an embodiment of the present invention.
FIG. 7 illustrates an example of a web page screen on an e-commerce site.
FIG. 8 illustrates another example of a web page screen on an e-commerce site.
FIG. 9 illustrates a performance comparison of attribute prediction using conventional techniques and an embodiment of the present invention.

## DESCRIPTION OF EMBODIMENTS

Hereinafter, embodiments of the present disclosure will be described in detail with reference to the accompanying drawings. Among the constituent elements disclosed below, those having the same function are denoted by the same reference numerals, and a description thereof is omitted. It should be noted that the embodiments disclosed herein are illustrative examples as means for implementing the present disclosure, and should be appropriately modified or changed depending on a configuration and various conditions of an apparatus to which the present disclosure is applied, and the present disclosure is not limited to the following embodiments. Furthermore, it should be noted that all of the combinations of features described in the following embodiments are not necessarily essential to the solution of the present disclosure.

The classification apparatus according to the present embodiment is configured to acquire a plurality of modalities associated with a given object and information identifying the object, generate feature values for each of the plurality of modalities, derive weights corresponding to each of the plurality of modalities based on the feature values and information identifying the object, and predict an attribute of the object from the concatenated feature values weighted by the corresponding weights. In the specification, a modality indicates information associated with an object and may be used interchangeably with modality information, a modality item, and a modality value, and may be referred to as such.

An example of an object is a commodity distributed in electronic commerce. An example of a plurality of modalities, which are information associated with an object, is image data showing an image of a product (hereinafter simply referred to as image data) and text data describing the product (hereinafter simply referred to as text data). An example of an attribute of an object is, in a case where the object is a product, color information of the product.

The following is only a non-limiting example of a classification apparatus, and an object is not limited to a product, but may be any service that may be provided to users. Information about the object is not limited to image data and text data, but may be any information related to the object, such as voice data. The attributes of the object may be any information specific to the object, not just color information.

<Functional Configuration of the Classification System>

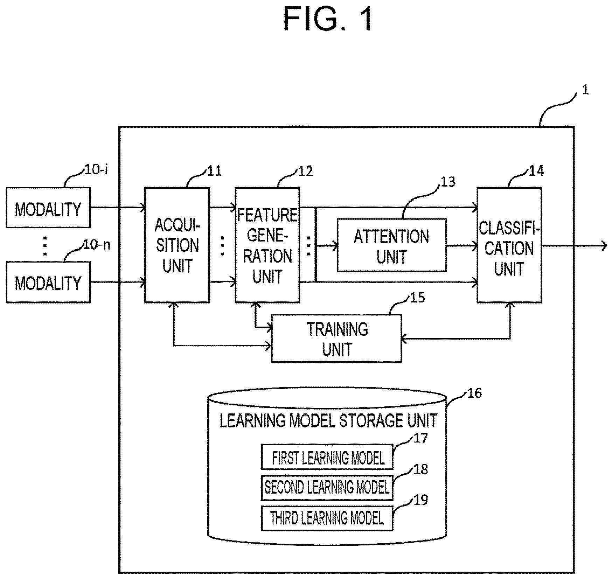

FIG. 1 illustrates an example of the functional configuration of a classification apparatus 1.

The classification apparatus 1 shown in FIG. 1 comprises an acquisition unit 11, a feature generation unit 12, an attention unit 13, a classification unit 14, a training unit 15, and a learning model storage unit 16. The learning model storage unit 16 stores a first learning model 17, a second learning model 18, and a third learning model 19, which are trained models in advance.

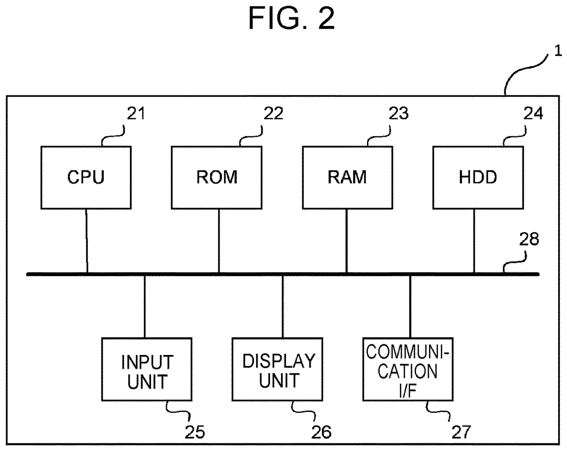

The acquisition unit 11 acquires a plurality of modalities (modalities 10-*i* to 10-*n* (*n* is an integer greater than or equal to 2)). The acquisition unit 11 acquires the plurality of modalities by a user (an operator) operating the classification apparatus 1 through an input unit 25 (FIG. 2) or from a memory (a ROM 22 or a RAM 23 in FIG. 2) by user operation. The acquisition unit 11 may also acquire the plurality of modalities received from an external device via a communication I/F 27 (FIG. 2).

The acquisition unit 11 may directly acquire the plurality of modalities, or it may acquire the plurality of modalities after performing an extraction process on input data. For example, in a case where the input data via input unit 25 is data that contains a plurality of modalities in a mixed manner, the acquisition unit 11 may extract and acquire the plurality of modalities from the data. As a specific example, in a case where the object is a product, the plurality of modalities are image data and text data, and the input data is a web page listing the product on an e-commerce site, the acquisition unit 11 may extract and acquire the image data and text data from the web page.

The plurality of modalities may be associated with information identifying the object associated with the modalities, and the acquisition unit 11 may be configured to acquire the information identifying the object by acquiring the plurality of modalities. Alternatively, the acquisition unit 11 may acquire the information identifying the object associated with the modality separately from the plurality of modalities.

The acquisition unit 11 outputs the acquired modalities to the feature generation unit 12. In a case where the acquisition unit 11 acquires information identifying the object separately from the plurality of modalities, it may output the information to the attention unit 13.

The acquisition unit 11 may also encode each of the acquired modalities and output the encoded modalities to the attention unit 13.

The feature generation unit 12 acquires the plurality of modalities output from the acquisition unit 11 (which may be the encoded modalities. The same applies hereinafter) and generates feature values for each modality. In the present embodiment, the feature generation unit 12 applies the plurality of modalities to the first learning model 17 and to generate feature values (feature expression) for each modality. For example, the feature generation unit 12 projects (maps) the plurality of modalities to a latent space common to all modalities using the first learning model 17 to acquire the feature values condensed into information indicating the feature.

The latent space indicates a space in which different modalities, i.e., modalities with different dimensions, are projected by compressing the dimensions, and in this common space, features/feature values of the different modalities are represented. By compressing the dimensions of the data of the plurality of modalities to be input, the feature generation unit 12 may generate a latent space representation (feature values) that is a reduced amount of information for each modality, i.e., a low-dimensional space after compression.

The first learning model 17 is, for example, a model constructed by Fully Connected Network (FCN) neural network. FCN is a type of Convolutional Neural Network (CNN). It is a network in which all the coupled layers of CNN are replaced by up-sampled convolutional layers. Alternatively, SegNet, etc. may also be used as a model for a neural network.

The feature generation unit 12 outputs the generated feature values for each modality to the attention unit 13 and the classification unit 14.

Attention unit 13 acquires the feature values for each modality from the feature generation unit 12 and generates attention weights for each modality from the feature values and information identifying the object. In the present embodiment, the attention unit 13 applies the feature values of each modality and the information identifying the object to the second learning model 18 to generate attention weights. The attention weights indicate an importance of each of the plurality of modalities to the attribute prediction of the object.

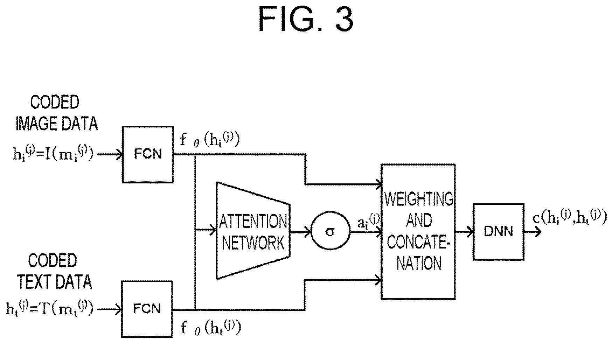

The second learning model 18 is, for example, a model constructed by a neural network (attention network) configured to acquire attention information. The attention weight for each modality is generated according to the object associated with the plurality of modalities acquired by the acquisition unit 11. For example, the attention weights generated for each modality may be different between a case in which the object is a product A and a case in which the object is a product B (the product B is different from the product A). The attention weights for the plurality of modalities acquired by the acquisition unit 11 are, for example, 1 in total. The attention weights generated by the attention unit 13 are described below with reference to FIGs 3 to 5.

Attention unit 13 outputs the generated attention weights for each modality to the classification unit 14.

The classification unit 14 acquires the feature values for each modality from the feature generator unit 12 and the attention weights from the attention unit 13 to predict an attribute of the object from the acquired information. In the present embodiment, the classification unit 14 uses a third learning model 19 stored in the learning model storage unit 16 to predict the attribute of the object.

Specifically, the classification unit 14 applies (e.g., multiplies) each feature value (the feature value for each modality) to the attention weight for each feature value to generate a weighted feature value, and then concatenates (integrates) all weighted feature values to acquire a concatenated value.

The classification unit 14 then applies the concatenated value to the third learning model 19 to predict and classify a class label (correct data) of the attribute. The classification unit 14 generates and outputs information on a classification result according to the classification. In a case where the attribute is color information of the product (the object), the classification unit 14 outputs color information of the object acquired by applying the concatenated value to the third learning model 19, as the classification result (i.e., a prediction result).

The classification result may be color information, or it may be an index indicating Recall that the Precision is 95% with the correct data (R@P95), etc.

The classification unit 14 may output the classification result to an unshown external device via, for example, the communication I/F 27 (FIG. 2) or display the classification result on the display unit 26 (FIG. 2).

The third learning model 19 is a model constructed, for example, by a multi-layer neural network with an input layer, an intermediate layer (a hidden layer), and an output layer consisting of multiple nodes. A multi-layer neural network is, for example, Deep Neural Network (DNN), CNN, Recurrent Neural Network (RNN), Long Short-Term Memory (LSTM).

The training unit 15 trains the first learning model 17, the second learning model 18, and the third learning model 19, respectively, and updates parameters of the first learning model 17, the second learning model 18, and the third learning model 19 with the trained model, respectively. The process of updating parameters may be performed using correct data for a plurality of modalities (i.e., information indicating the attribute of the object to which the plurality modalities are related) with a sufficient number of samples that have been input to the training unit 15 in advance. The training unit 15 compares the classification result by the classification unit 14 for the plurality of modalities acquired by the acquisition unit 11 with the correct data. For example, the parameters for a neural network may be updated according to a gradient descent optimization procedure.

The first learning model 17, the second learning model 18, and the third learning model 19 with updated parameters are stored in the learning model storage unit 16.

Note that the configuration shown in FIG. 1 is illustrative of the functional configuration of the classification apparatus 1 and does not mean that the classification apparatus 1 according to the present embodiment is implemented in a single device. The functional configuration shown in FIG. 1 may, for example, be implemented in multiple servers or other devices interconnected by a network, and each part and memory unit of the classification apparatus 1 shown in FIG. 1 may be implemented in the same device or in different devices from each other. For example, the feature generation unit 12 and the attention unit 13 of the classification apparatus 1 may be implemented on different devices from each other. In addition, the learning model storage unit 16 may be configured outside the classification apparatus 1.

<Hardware Configuration of Classification Apparatus>

FIG. 2 is a diagram showing a non-limiting example of the hardware configuration of the classification apparatus 1 according to the present embodiment.

The classification apparatus 1 according to the present embodiment may be implemented on any computer or on any other processing platform. The classification apparatus 1 may be implemented in a general-purpose server device comprising a cloud or may be implemented in a dedicated server device.

Referring to FIG. 2, the classification apparatus 1 is illustrated as being implemented in a single computer, but the classification apparatus 1 according to the present embodiment may be implemented in a computer system including a plurality of computers. The plurality of computers may be interconnected by wired or wireless networks to be able to communicate with each other.

As shown in FIG. 2, the classification apparatus 1 may include a Central Processing Unit (CPU) 21, a Read Only Memory (ROM) 22, a Random Access Memory (RAM) 23, a Hard Disk Drive (HDD) 24, an input unit 25, a display unit 26, a communication I/F 27, and a system bus 28. The classification apparatus 1 may also include an external memory.

The CPU 21 controls an overall operation of the classification apparatus 1, and controls each of the constituent elements (the ROM 22 to the communication I/F 27) via the system bus 28 which is a data transmission path.

The ROM 22 is a non-volatile memory for storing a control program or the like required for the CPU 21 to execute processing. The program may be stored in an external memory such as a non-volatile memory or a removable storage medium (not shown) such as the HDD 304, a Solid State Drive (SSD), or the like.

The RAM 23 is a volatile memory and functions as a main memory, a work area, and the like of the CPU 21. That is, the CPU 21 loads a required program or the like from the ROM 22 into the RAM 23 at the time of executing processing and executes a program or the like to realize various functional operations.

The HDD 24 stores, for example, various data and various information required when the CPU 21 performs processing using a program. Furthermore, the HDD 24, for example, various data and various information obtained by the CPU 21 performs processing using a program or the like is stored.

The input unit 25 is configured by a pointing device such as a keyboard or a mouse.

The display unit 26 is configured by a monitor such as a Liquid Crystal Display (LCD). The display unit 26 may provide a Graphical User Interface (GUI) for instructing the classification apparatus 1 to input communication parameters used in communication with other apparatuses, and the like.

The communication I/F 27 is an interface for controlling communication between the classification apparatus 1 and an external apparatus.

The communication I/F 27 provides an interface to at network and executes communication with an external apparatus via the network. Various data, various parameters, etc. may be transmitted and received to and from an external apparatus via the communication I/F 27. In the present embodiment, the communication I/F 27 may perform communication via a wired Local Area Network (LAN) or leased line that conforms to a communication standard such as Ethernet (registered trademark). However, the network available in the present embodiment is not limited to this and may consist of any wireless network. The wireless network may include a wireless personal area network (PAN) such as Bluetooth (registered trademark), ZigBee (registered trademark), UWB (registered trademark). The wireless network may include a wireless LAN such as Wi-Fi (Wireless Fidelity) (registered trademark) or a wireless metropolitan area network (MAN) such as WiMAX (registered trademark). In addition, the wireless network may include wireless wide area network (WAN) such as LTE/3G, 4G, 5G. Note that the network needs only be capable of connecting and communicating with each other, and the standard, scale, and configuration of the communication is not limited to the above.

At least some of the functions of each element of the classification apparatus 1 shown in FIG. 1 may be realized by the CPU 21 executing programs. However, at least some of the functions of each element of the classification apparatus 1 shown in FIG. 2 may operate as dedicated hardware. In this situation, the dedicated hardware operates based on the control of the CPU 21.

<Example of Processing by Feature Generation Unit 12, Attention Unit 13, and Classification Unit 14>

FIG. 3 illustrates a schematic diagram illustrating the processing by the feature generation unit 12, the attention unit 13, and the classification unit 14 of the classification apparatus 1. In this example, it is assumed that the feature generation unit 12 uses the first learning model 17 constructed by a neural network of CNN, and the attention unit 12 uses the second learning model 18 constructed by an attention network. In addition, it is assumed that the classification unit 14 uses the third learning model 19 constructed by a neural network of DNN.

In FIG. 3, it is assumed that the plurality of modalities acquired by the acquisition unit 11 are image data and text data related to the object (i.e., the product). Here, image data is represented as $m_i^{(j)}$ and text data is represented as $m_t^{(j)}$, where $j$ is a parameter (information) that identifies the product.

The acquisition unit 11 acquires encoded image data $h_i^{(j)}$ (=$I(m_i^{(j)})$) in which the image data $m_i^{(j)}$ is encoded, and encoded text data $h_t^{(j)}$ (=$T(m_t^{(j)})$) in which the text data $m_t^{(j)}$ is encoded. I (.) and T (.) denote the coding functions for encoding image data and text data, respectively.

The feature generation unit 12 applies the image data $h_i^{(j)}$ and the text data $h_t^{(j)}$ to the neural network of FCN to obtain, from the output layer, the feature value $f_\theta(h_i^{(j)})$ for the image data $h_i^{(j)}$ and the feature value $f_\theta(h_t^{(j)})$ for text data $h t^{(j)}$ as latent space representations, where fe (.) is the neural network of FCN parameterized with $\theta$.

The attention unit 12 applies the feature value $f_\theta(h_i^{(j)})$ for the image data $h_i^{(j)}$ and the feature value $f_\theta(h_t^{(j)})$ for the text data $h_t^{(j)}$ to the attention network, and inputs the output layer vector of the network to the sigmoid function ($\sigma$) to derive the attention weights for the image data $h_i^{(j)}$ and the text data $h_t^{(j)}$. In this example, the sum of both attention weights is 1, and the attention weight $a^{(j)}$ for the image data $h_i^{(j)}$ is derived. Alternatively, a weight for text data $h_t^{(j)}$ may be derived.

Note that, although the sigmoid function ($\sigma$) is used in FIG. 3, other activation functions such as the softmax function or other activation functions may be used.

The attention weight $a^{(j)}$ for image data $h_i^{(j)}$ for the product $j$ is expressed as in Eq. (1).

$$a^{(j)} = \sigma\big(W\big[f_\theta(h_i^{(j)}), f_\theta(h_t^{(j)})\big] + b\big) \qquad \text{Eq. (1)}$$

where W [$f_\theta(h_i^{(j)})$, $f_\theta(h_t^{(j)})$] is the concatenated value in which the weight coefficient applies to the feature value fe ($h_i^{(j)}$) of the image data $h_i^{(j)}$ and the feature value fe ($h_t^{(j)}$) of the text data $h_t^{(j)}$ and concatenated. In addition, $b$ (a value greater than or equal to 0) represents the bias. The values of the weight coefficients and bias are given arbitrary initial values and are determined by the learning process by the learning unit 15 using a plurality of modalities (image data and text data) and many sets of correct data (attribute information of products) for the modalities. The attention weight $a^{(j)}$ for the

image data $h_i^{(j)}$ is a different value for each product j.

The attention weight for the text data $h_t^{(j)}$ is derived as $(1-a^{(j)})$.

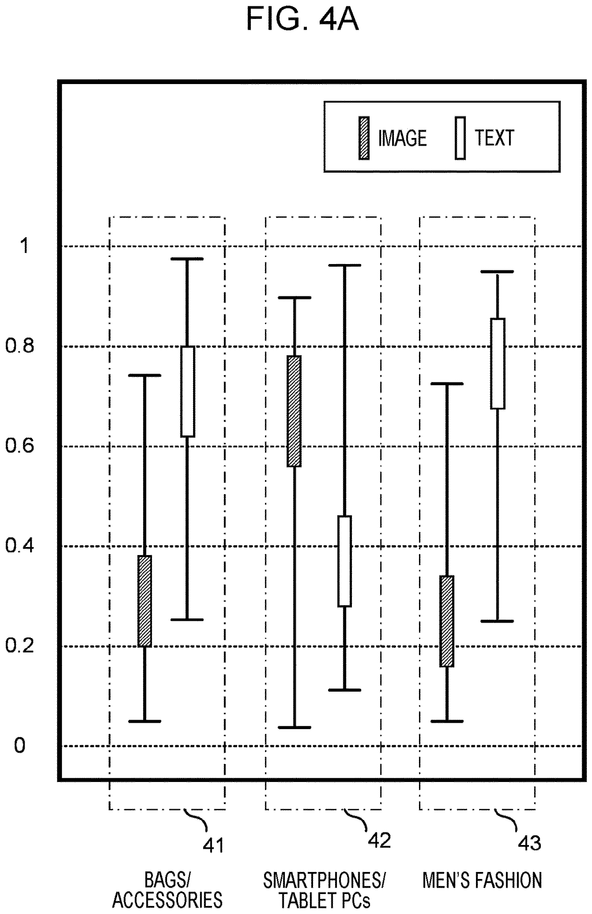

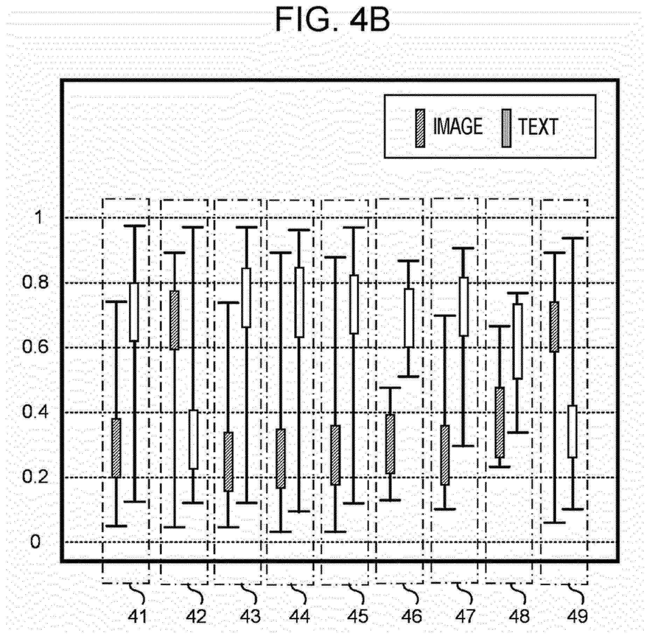

The post-training distribution of the attention weight $a^{(j)}$ for the image data $h_i^{(j)}$ and the attention weight $(1- a^{(j)})$ for the text data $h_t^{(j)}$ for product j are described below with reference to FIGs 4A and 4B.

Once the attention weights $a^{(j)}$ for the image data $h_i^{(j)}$ and the attention weights $(1-a^{(j)})$ for the text data $h_t^{(j)}$ are derived, the classification unit 14 then perform weighting and concatenation processing for the feature value $f_\theta (m_i^{(j)})$ for image data $h_i^{(j)}$ and the feature value $f_\theta (h_t^{(j)})$ for the text data $h_t^{(j)}$.

The values after weighting and concatenation are expressed as in Eq. (2).

$$[a^{(j)} * f_\theta(h_i^{(j)}), \left(1 - a^{(j)}\right) * f_\theta(h_t^{(j)})] \qquad \text{Eq. (2)}$$

The classification unit 14 applies the concatenated values expressed as in Eq. (2) to DNN to predict and classify a class label of an attribute for the project j (e.g., color information of product j) associated with the image data $h_i^{(j)}$ and the text data $h_t^{(j)}$, as c $(h_i^{(j)}, h_t^{(j)})$. Each node of the output layer in DNN corresponds to a class of the attribute that product j may have (e.g., a color type that product j may have in a case where the attribute is color information). The number of nodes is the number of classes of the attribute that product j may have (e.g., the number of color types that product j may have). All class classification (identification) is performed by using DNN.

Next, the post-learning distributions of the attention weights $a^{(j)}$ for the image data and $(1-a^{(j)})$ for the text data for product j are shown in FIGs 4A and 4B. The learning is performed by the learning unit 15 using many sets of modalities (image data and text data, or encoded data of each of image data and text data) and the attribute information (color information) of the product as the correct data for the modalities.

FIG. 4A illustrates a distribution of the attention weights $a^{(j)}$ for the image data and the attention weights $(1-a^{(j)})$ for the text data for each genre to which the object (i.e., the product) belongs. In general, a comprehensive e-commerce site comprises a huge number of products, and a plurality of products belonging to the same genre tend to have similar weight distribution characteristics, so that FIG. 4A illustrates the distribution for each genre to which they belong.

In FIG. 4A, the distribution of attention weights for image data and text data are represented for the three genres. A genre 41 indicates "bags/accessories", a genre 42 indicates "smartphones/tablet PCs", and a genre 43 indicates "men's fashion". In each of the distributions of attention weights for image data and text data, the range of maximum and minimum values is represented by a line, and the distribution close to the mean for each data is represented by a box. The shaded boxes indicate the distribution of attention weights for image data, and the unshaded boxes indicate the distribution of attention weights for text data.

In the distribution of the genre 41 ("bags/accessories"), the attention weights for text data are distributed at a higher value than the attention weights for image data. This means, for example, that text data, i.e., descriptive text describing a product in the category of "bags/accessories", is more likely to directly include color information of the product. Bags/accessories are products of a genre that tends to divide preferences based on shape, color, and brand. It is thought that the attention weight of text data becomes higher than that of image data because text data is less ambiguous and more reliable than image data in terms of color.

In the distribution of the genre 42 ("smartphones/tablet PCs"), the opposite characteristics to the distribution of the genre 41 ("bags/accessories") in terms of image and text data is observed. That is, the attention weights for image data are distributed with higher values than those for text data. This is because, for example, explanatory text (text data) describing products in "smartphones/tablet PCs" genre tends to include many descriptions related to functions of "smartphones/tablet PCs", and the image data tends to represent color information itself.

The distribution of the genre 43 ("men's fashions") shows the same characteristics as the distribution of the genre 41 ("bags/accessories"). This means that, as in the genre 41 ("bags/accessories"), descriptions (text data) describing products in the genre in the men's fashion product have a high tendency to directly include color information for the product.

Although shown for three genres in FIG 4A, FIG. 4B illustrates a distribution of the attention weights for a plurality of genres 41 to 49 to which the similar training is applied. The genres 41 to 43 are the same as in FIG. 4A. A genre 44 indicates "women's fashion", a genre 45 indicates "shoes", a genre 46 indicates "health care/medical supplies", a genre 47 indicates "kids/baby/maternity", a genre 48 indicates "watches", and a genre 49 indicates "car/motorcycle accessories".

In FIG. 4B, in the genre 42 ("smartphone/Tablet PCs") and the genre 49 ("car/motorcycle accessories"), the attention weights for image data are higher than those for text data, while in other genres 41, and 43 to 48, the attention weights for text data are distributed at higher values than those for image data.

The results shown in FIG. 4B indicate that color information is often directly represented by the description of the product (text data), and that the attention weights for text data tend to be distributed at higher values than the attention weights for image data.

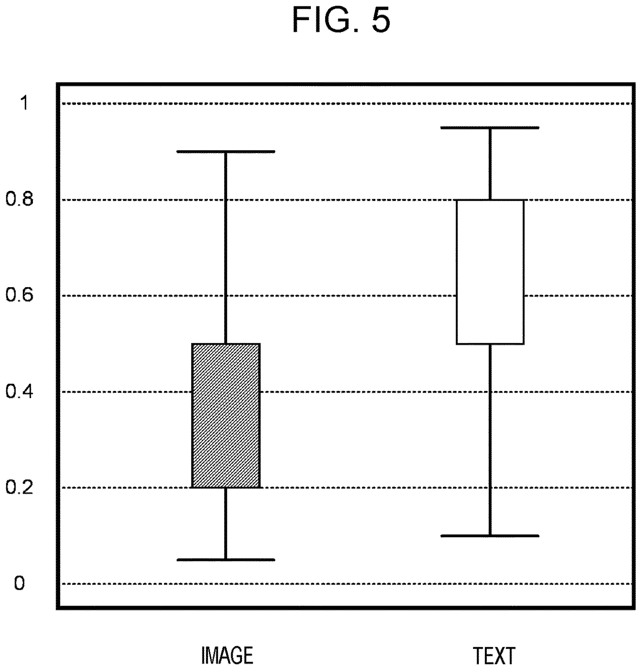

FIG. 5 illustrates the results of FIGs 4A and 4B, summarized for each image and text data. As in FIGs 4A and 4B, the range of maximum and minimum values is represented by lines, and for each data, the distribution near the mean is represented by boxes. The shaded boxes indicate the distribution of attention weights for the image data, and the unshaded boxes indicate the distribution of attention weights for the text data.

FIG. 5 shows that the distribution of attention weights for text data has lower values than the distribution of attention weights for image data. This means that, in general, text data often directly contains color information about the product, as described above.

<Processing Flow>

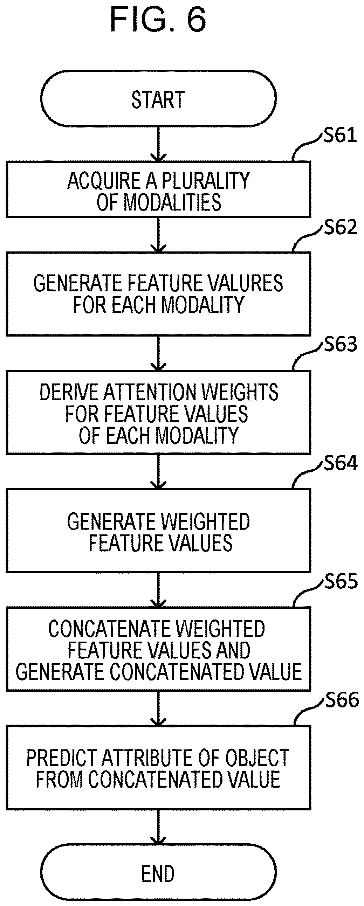

FIG. 6 illustrates a flowchart of an example of processing steps of the classification process performed by the classification apparatus 1.

Each step in FIG. 6 is realized by the CPU reading and executing a program stored in the memory of the classification apparatus 1. At least part of the flowchart shown in FIG. 6 may also be realized by hardware. In the case of hardware realization, for example, a predetermined compiler may be used to convert to a Field Programmable Gate Array (FPGA) from the program for realizing each step. Also, a Gate Array circuit can be formed in the same way as an FPGA and realized as hardware. In addition, an Application Specific Integrated Circuit (ASIC) may also be used.

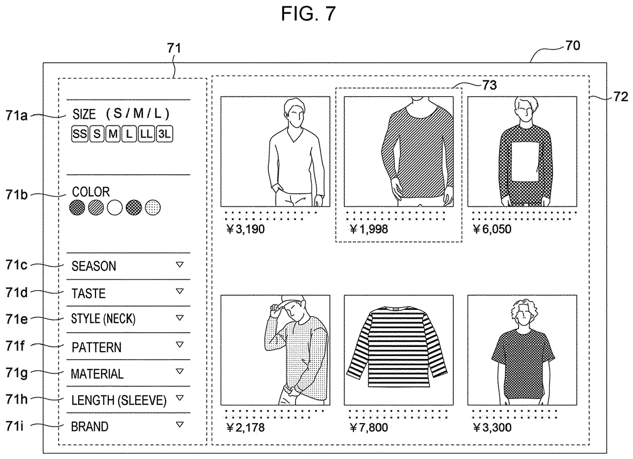

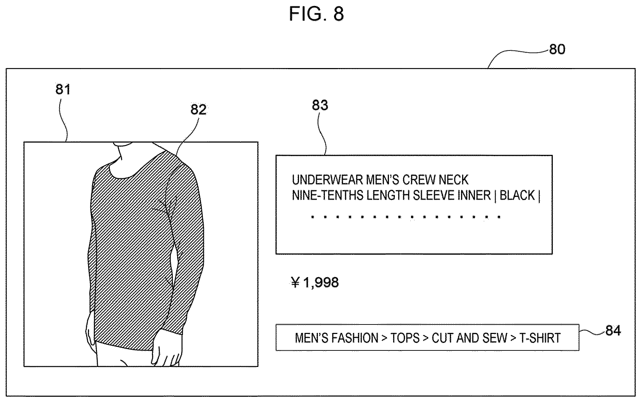

With respect to the explanation in FIG. 6, we refer to FIGs 7 and 8.

In S61, the acquisition unit 11 acquires a plurality of modalities. As described above, the plurality of modalities may be encoded modalities. In the present embodiment, the acquisition unit 11 acquires image data and text data (which may be the encoded data) via the input unit 25 as the plurality of modalities. In a case where the data input to the input unit 25 is screen data of a web page on an e-commerce site, the acquisition unit 11 extracts an image portion as image data and a description portion of the product as text data.

FIG. 7 illustrates an example of a web page screen on an e-commerce site with products listed, wherein a screen 70 of a web page is shown with one or more products (clothes) included in the men's fashion genre.

In the screen 70 of FIG. 7, an area 71 shows a plurality of attributes for each product for each product. In the example in FIG. 7, the attributes for each product include: a size 71a, a color 71b, a season 71c, a taste 71d, a style (neck) 71e, a pattern 71f, a material 71g, a length (sleeve) 71h, and a brand 71i.

As an example, the attributes for each product have the following meanings.

The size 71a represents a standardized clothing size and may be one of SS to 3L. The color 71b represents a color of the clothing which is one of five colors. The season 71c represents a season type appropriate for wearing the clothing. The taste 71d represents a type of mood or flavor of the clothing. The style (neck) 71e represents a type of design of the collar portion of the clothing. The pattern 71f represents a type of pattern of the fabric of the clothing. The material 71g represents a type of fabric of the clothing. The length (sleeve) 71h represents a type of sleeve length of the clothing. The brand 71i represents the name of the company/service that indicates the manufacturer/design producer of the clothing.

As an example, in each of the attributes represented in the area 71 of FIG. 7, in the size 71a and the color 71b, the respective types are shown. In the season 71c, the taste 71d, the style (neck) 71e, the pattern 71f, the material 71g, the length (sleeve) 71h, and the brand 71i, each type is displayed in a pull-down menu (not shown). The display (presentation) format is not limited to the illustrated example.

An area 72 shows information about each product.

In the example in FIG. 7, the information about each product includes an image representing at least part of the product, a description of the product, and a price, with a similar layout for all products. This is just an example, and the layout of the information about each product may be determined with any manner.

In a case where an area 73 is selected by a user (an operator), the selection may be made with a pointing device such as a mouse, for example. FIG. 8 illustrates an example of the web page screen that is displayed in a case where the user selects the area 73.

FIG. 8 illustrates an example of a web page screen for the product shown in the area 72 of FIG. 7.

In a screen 80 of FIG. 8, image data 81 represents image data of a product 82, and text data 83 represents text data describing the product 82. In addition, an area 84 shows a relationship between all genres of products in the e-commerce site as products (left) until screen 80 is displayed by the user's operation, and the relationship between the subdivided genres (right) is shown.

The acquisition unit 11 acquires the image data 81 and the text data 83 and outputs them to the feature generation unit 12. In a case where the layout positions of image data 81 and text data 83 have been input (set), the acquisition unit 11 acquires the image data 81 and the text data 82 according to the layout positions. In addition, the acquisition unit 11 may acquire the image data 81 and the text data 82 respectively using image processing techniques that identifies the image data 81 and the text data 82, respectively.

In addition, in a case where the image data 81 and the text data 83 are associated with the information of the product 82 in advance, the acquisition unit 11 may acquire the image data 81, the text data 82, and the information of the product 82, simultaneously. Alternatively, the acquisition unit 11 may acquire the most subdivided genre of the genre indicated in the area 84 ("T-shirt" in the example in FIG. 8) as the information of the product 82.

Returning to the explanation in FIG. 6, in S62, the feature generation unit 12 generates feature values for each modality of the acquired plurality of modalities. Referring to FIGs 7 and 8, the feature generation unit 12 acquires the image data 81 and the text data 83 from the acquisition unit 11 and generates feature values (characteristic expression) for the image data 81 and the text data 83. For example, the feature generation unit 12 applies the image data 81 and the text data 83 to the first learning model 17 and projects them to the latent space common to all the modalities to generate the feature values for the image data 81 and the text data 83.

In S63, the attention unit 13 derives the attention weights for the feature value of each modality. Referring to FIGs 7 and 8, the attention unit 13 acquires the feature values of the image data 81 and the text data 83 generated by feature generation unit 12, derives the attention weights for each, and generates an attention distribution (attention map). The attention weight is as described with reference to FIG. 3.

In S64, the classification unit 14 applies the feature values of each modality to the corresponding attention weights to generate weighted feature values. Referring to FIGs 7 and 8, the classification unit 14 applies the feature values of the image data 81 and the text data 83 generated by the feature generation unit 12 to the corresponding attention weights derived by the attention unit 13 to generate weighted feature values.

In S65, the classification unit 14 concatenates the weighted feature values. Referring to FIGs 7 and 8, the classification unit 14 concatenates the weighted feature values of the image data 81 and the text data 83 and generates a concatenated value. In the subsequent S66, the classification unit 14 applies the generated concatenated value to the third learning model to predict the attribute(s) of the object. Refer to the examples in FIGs 7 8, the classification unit 14 predicts the class label of the attribute of the product 82. In a case where the attribute is color information, the classification unit 14 predicts the color information of the product 82.

For example, the classification unit 14 may predict whether the product 82 in the screen 80 in FIG. 8 corresponds to one of the types of colors 71b in the screen 70 in FIG. 7. In the examples shown in FIGs 7 and 8, the attributes may be any of the attributes included in the area 71 and, for example, the classification unit 14 may be configured to predict the type among the attributes of size 71a-71i as the attributes of the product 82.

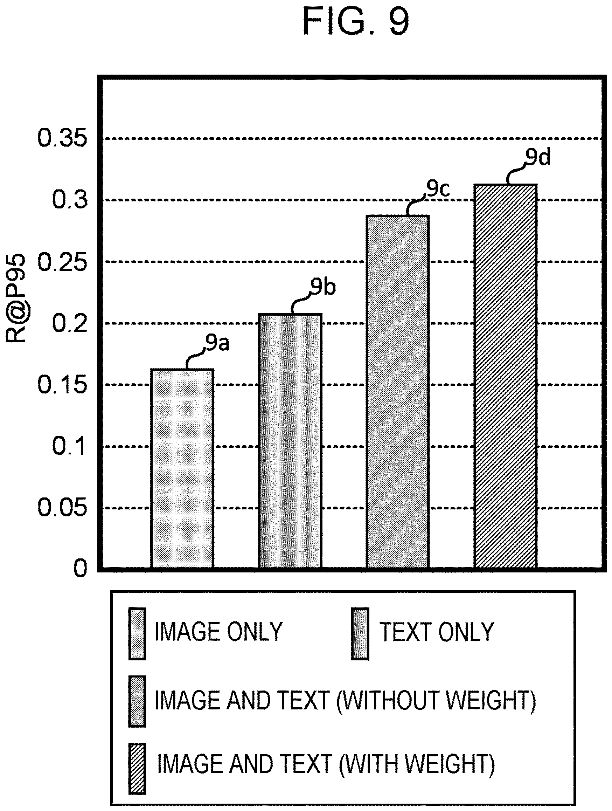

Referring to FIG. 9, the effect of attribute prediction method according to the present embodiment is described. FIG. 9 illustrates a performance comparison between the conventional attribute prediction method and the attribute prediction method according to the present embodiment, wherein the object is assumed to be a product.

A graph 9a represents the result of object attribute prediction using image data as a single modality. A graph 9b represents the results of object attribute prediction using text data as a single modality. A graph 9c represents the results of attribute prediction using image data and text data concatenated without attention weights as a plurality of modalities. A graph 9d represents the results of attribute prediction by concatenating image data and text data as a plurality of e modalities with attention weights according to the object, as in the present embodiment.

The vertical axis (R@P95) indicates Recall that the Precision is 95% with the correct data (R@P95), as an index of performance evaluation.

From the graphs in FIG. 9, we can first see that the prediction performance of product (object) attributes is higher when a plurality of modalities (multimodal) are used than when a single modality is used. It also shows that by changing the attention weights between image data and text data for each product, as in the present embodiment, the attributes of the product (object) can be identified with higher accuracy.

As explained above, according to the present embodiment, the classification apparatus acquires a plurality of modalities associated with an object as input, generates feature values for the plurality of modalities, then weights and concatenates them with the attention weights according to the object, and identifies attributes of the object from the concatenated values. The attributes of the object are then identified from the concatenated values. This process makes it possible to predict and identify the attributes of objects with higher accuracy than when a single modality is used or when a plurality of modalities are used without weighting according to the object.

This enables the prediction of the attribute from modalities associated with the object, even when the attribute of the object is not defined. In addition, in a case where the present embodiment is applied to a product (an object), image data and text data (a plurality of modalities) on an e-commerce site, it can be expected to improve the shopping experience by the user, which may lead to increased sales. In addition, for the user/product provider side, filtering of product items will become easier, contributing to improved convenience by the user and improved marketing analysis.

While specific embodiments have been described above, the embodiments are illustrative only and are not intended to limit the scope of the invention. The apparatus and method described herein may be embodied in other forms than as described above. In addition, it is also possible to appropriately omit, replace, and change the above-described embodiment without departing from the scope of the present invention. Such omissions, substitutions and alterations fall within the scope of the appended claims and their equivalents and fall within the scope of the present invention.

[Reference Signs List]

1: Classification apparatus, 10-i to n: Modalities, 11: Acquisition unit, 12. 12: Feature generation unit, 13: Attention unit, 14: Classification unit, 15: Learning unit, 16: Learning model storage, 17: First learning model, 18: Second learning model, 19: Third learning model

**Claims**

1.   An information processing apparatus comprising:

   an acquisition means for acquiring a plurality of modalities associated with an object and information identifying the object;
   a feature generation means for generating feature values for each of the plurality of modalities;
   a deriving means for deriving weights corresponding to each of the plurality of modalities based on the feature values for each of the plurality of modalities and information identifying the object; and
   a prediction means for predicting an attribute of the object from a concatenated value of the feature values for each of the plurality of modalities, weighted by the corresponding weights.

2.   The information processing apparatus according to Claim 1, wherein
   the deriving means derives, from the plurality of feature values and the information identifying the object, attention weights that indicate the importance of each of the plurality of modalities to the attribute prediction, as the weights corresponding to each of the plurality of feature values.

3.   The information processing apparatus according to Claim 2, wherein
   the attention weights of the plurality of modalities are 1 in total.

4.   The information processing apparatus comprising:

   an acquisition means for acquiring a plurality of modalities associated with an object and information identifying the object;
   a feature generation means for generating feature values for each of the plurality of modalities;
   a deriving means for deriving weights corresponding to each of the plurality of feature values by applying the feature values for each of the plurality of modalities and the information identifying the object to the second learning model, and
   a prediction means for predicting an attribute of the object by applying a concatenated value of the feature values of each for the plurality of modalities, weighted by the corresponding weights, to the third learning model, wherein
   the second learning model is a learning model that outputs different weights for each object.

5.   The information processing apparatus according to Claim 4, wherein
   the second learning model is a learning model that takes, as input, the plurality of feature values and information identifying the object, and outputs, as the weights corresponding to each of the plurality of feature values, the attention weights indicating the importance of each of the plurality of modalities to the attribute prediction.

6.   The information processing apparatus according to Claim 5, wherein
   the attention weights of the plurality of modalities are 1 in total.

7.   The information processing apparatus according to any one of Claims 4 to 6, wherein
   the first learning model is a learning model that takes, as input, the plurality of modalities and outputs the feature values of the plurality of modalities by mapping them to a latent space common to the plurality of modalities.

8.   The information processing apparatus according to any one of Claims 4 to 7, wherein
   the third learning model is a learning model that outputs a prediction result of the attribute using the concatenated value as input.

9. The information processing apparatus according to any one of Claims 1 to 8, wherein

   the acquisition means encodes the plurality of modalities to acquire a plurality of encoded modalities, and
   the feature generation means generates the feature values for each of the plurality of encoded modalities.

10. The information processing apparatus according to any one of Claims 1 to 9, wherein
    the object is a commodity, and the plurality of modalities includes two or more of data of an image representing the commodity, data of text describing the commodity, and data of sound describing the commodity.

11. The information processing apparatus according to any one of Claims 1 to 8, wherein the attribute of the object includes color information of the product.

12. An information processing method comprising:

    acquiring a plurality of modalities associated with an object and information identifying the object;
    generating feature values for each of the plurality of modalities;
    deriving weights corresponding to each of the plurality of modalities based on the feature values for each of the plurality of modalities and information identifying the object; and
    predicting an attribute of the object from a concatenated value of the feature values for each of the plurality of modalities, weighted by the corresponding weights.

13. An information processing method comprising:

    acquiring a plurality of modalities associated with an object and information identifying the object;
    generating feature values for each of the plurality of modalities;
    deriving weights corresponding to each of the plurality of feature values by applying the feature values for each of the plurality of modalities and the information identifying the object to the second learning model, and
    predicting an attribute of the object by applying a concatenated value of the feature values of each for the plurality of modalities, weighted by the corresponding weights, to the third learning model, wherein
    the second learning model is a learning model that outputs different weights for each object.

14. An information processing program for causing a computer to execute information processing, the program causing the computer to execute processing, comprising:

    an acquisition process for acquiring a plurality of modalities associated with an object and information identifying the object;
    a feature generation process for generating feature values for each of the plurality of modalities;
    a deriving process for deriving weights corresponding to each of the plurality of modalities based on the feature values for each of the plurality of modalities and information identifying the object; and
    a prediction process for predicting an attribute of the object from a concatenated value of the feature values for each of the plurality of modalities, weighted by the corresponding weights.

15. An information processing program for causing a computer to execute information processing, the program causing the computer to execute processing, comprising:

    an acquisition process for acquiring a plurality of modalities associated with an object and information identifying the object;
    a feature generation process for generating feature values for each of the plurality of modalities;
    a deriving process for deriving weights corresponding to each of the plurality of feature values by applying the feature values for each of the plurality of modalities and the information identifying the object to the second learning model, and
    a prediction process for predicting an attribute of the object by applying a concatenated value of the feature values of each for the plurality of modalities, weighted by the corresponding weights, to the third learning model, wherein
    the second learning model is a learning model that outputs different weights for each object.

# FIG. 1

# FIG. 2

1

| 21 | 22 | 23 | 24 |
|---|---|---|---|
| CPU | ROM | RAM | HDD |

28

| INPUT UNIT | DISPLAY UNIT | COMMUNI-CATION I/F |
|---|---|---|
| 25 | 26 | 27 |

# FIG. 3

CODED
IMAGE DATA

$h_i^{(j)} = I(m_i^{(j)})$ ⟶ FCN $f_\theta(h_i^{(j)})$

ATTENTION NETWORK

$\sigma$ $a_i^{(j)}$

WEIGHTING AND CONCATE-NATION

DNN $c(h_i^{(j)}, h_t^{(j)})$

CODED
TEXT DATA

$h_t^{(j)} = T(m_t^{(j)})$ ⟶ FCN $f_\theta(h_t^{(j)})$

# FIG. 4A

Legend: IMAGE  TEXT

Categories:
41 — BAGS/ACCESSORIES
42 — SMARTPHONES/TABLET PCs
43 — MEN'S FASHION

# FIG. 4B

# FIG. 5

IMAGE                    TEXT

# FIG. 6

```
                    START
                      |
                      v                        S61
        +--------------------------------+
        |    ACQUIRE A PLURALITY          |
        |      OF MODALITIES              |
        +--------------------------------+
                      |
                      v                        S62
        +--------------------------------+
        |   GENERATE FEATURE VALURES      |
        |     FOR EACH MODALITY           |
        +--------------------------------+
                      |
                      v                        S63
        +--------------------------------+
        |   DERIVE ATTENTION WEIGHTS      |
        |     FOR FEATURE VALUES          |
        |      OF EACH MODALITY           |
        +--------------------------------+
                      |
                      v                        S64
        +--------------------------------+
        |    GENERATE WEIGHTED            |
        |     FEATURE VALUES              |
        +--------------------------------+
                      |
                      v                        S65
        +--------------------------------+
        |  CONCATENATE WEIGHTED           |
        |    FEATURE VALUES AND           |
        | GENERATE CONCATENATED VALUE     |
        +--------------------------------+
                      |
                      v                        S66
        +--------------------------------+
        |  PREDICT ATTRIBUTE OF OBJECT    |
        |   FROM CONCATENATED VALUE       |
        +--------------------------------+
                      |
                      v
                    END
```

FIG. 7

FIG. 8

# FIG. 9

**INTERNATIONAL SEARCH REPORT**

| International application No. |
| --- |
| PCT/JP2021/027527 |

A.  CLASSIFICATION OF SUBJECT MATTER
G06Q 30/02(2012.01)i
FI: G06Q30/02

According to International Patent Classification (IPC) or to both national classification and IPC

B.  FIELDS SEARCHED

Minimum documentation searched (classification system followed by classification symbols)
G06Q30/02

Documentation searched other than minimum documentation to the extent that such documents are included in the fields searched
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | JP 2019-49945 A (YAHOO JAPAN CORP) 28 March 2019 (2019-03-28) paragraphs [0039]-[0053] | 1-3, 9-10, 12, 14 |
| A | entire text, all drawings | 4-8, 11, 13, 15 |
| Y | 田村 哲嗣，マルチモーダル音声区間検出を用いたマルチモーダル音声認識の検討，電子情報通信学会技術研究報告，15 February 2010 (accession date)，vol. 109, no. 376, pp. 345-350, p. 347, (TAMURA, Satoshi. Multimodal speech recognition using multimodal voice activity detection. IEICE technical report.) | 1-3, 9-10, 12, 14 |
| Y | JP 2020-140362 A (KDDI CORP) 03 September 2020 (2020-09-03) paragraphs [0038]-[0040] | 9-10 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 August 2021 (06.08.2021) | 31 August 2021 (31.08.2021) |

| Name and mailing address of the ISA/ Japan Patent Office 3-4-3, Kasumigaseki, Chiyoda-ku, Tokyo 100-8915, Japan | Authorized officer

Telephone No. |
| --- | --- |

Form PCT/ISA/210 (second sheet) (January 2015)

**INTERNATIONAL SEARCH REPORT**
Information on patent family members

International application No.

PCT/JP2021/027527

| Patent Documents referred in the Report | Publication Date | Patent Family | Publication Date |
|---|---|---|---|
| JP 2019-49945 A | 28 Mar. 2019 | (Family: none) | |
| JP 2020-140362 A | 03 Sep. 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TIANGANG ZHU.** Multimodal Joint Attribute Prediction and Value Extraction for E-commerce Product. *Proceedings of the 2020 Conference on Empirical Methods in Natural Language Processing (EMNLP,* November 2020, 2129-2139